Europäisches Patentamt

European Patent Office

Office européen des brevets

(19)

(11) Veröffentlichungsnummer: **0 518 008 A1**

## (12) EUROPÄISCHE PATENTANMELDUNG

(21) Anmeldenummer: **92104836.9**

(22) Anmeldetag: **20.03.92**

(51) Int. Cl.5: **B60T 7/12**, B60T 1/00

(30) Priorität: **20.03.91 IT PD910061**

(43) Veröffentlichungstag der Anmeldung:
**16.12.92 Patentblatt 92/51**

(84) Benannte Vertragsstaaten:
**DE ES FR GB SE**

(71) Anmelder: **Strazzabosco, Giovanni**
**Via Podestà 21**
**I-36012 Asiago (Vicenza)(IT)**

(72) Erfinder: **Strazzabosco, Giovanni**
**Via Podestà 21**
**I-36012 Asiago (Vicenza)(IT)**

(74) Vertreter: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Vorrichtung zum Verhindern des Zurückrollens von Fahrzeugen.**

(57) Es geht dabei um eine mechanische, automatische Vorrichtung, die dazu dient, das Zurückweichen von Fahrzeugen zu vermeiden, wenn sie auf abschüssigen Straßen halten. Ein Mechanismus, der auf der Antriebseinrichtung angebracht ist, erlaubt die Rotation nur in eine Richtung. Das Ein- und Ausschalten erfolgt durch den Schaltknüppel.

fig. 1

EP 0 518 008 A1

Im allgemeinen zieht man bei Fahrzeugen, während des Haltens die Handbremse, damit sich das Fahrzeug nicht bewegt.

Sollte das Fahrzeug auf einer abschüssigen Straße halten müssen, so legt man zusätzlich noch entweder den Rückgang oder den ersten Gang ein, je nachdem ob das Fahrzeug aufwärts oder abwärts steht.

Für sehr große Fahrzeuge, die auch schwer sind, wie z.B. Lastkraftwagen, Lastzüge, Lastkraftwagen mit Anhänger usw., verwendet man auch oft Metallkeile, die man unter die Räder legt, um dem Fahrzeug mehr Sicherheit zu geben.

Die in diesem Patent beschriebene Erfindung ist ein Gegenstand, der die natürliche Abwärtsbewegung der Fahrzeuge, die auf abschüssigen Straßen stehen oder parken, verhindert, ohne daß die Handbremse oder die normale Bremse betätigt werden muß.

Die Erfindung besteht aus einer mechanischen Vorrichtung, die auf die Antriebseinrichtung eingebaut wird, indem man die nötigen Abänderungen vornimmt; die Vorrichtung wird mechanisch, pneumatisch, hydraulisch, elektromechanisch oder auf ähnliche Weise durch den Schaltknüppel eingelegt.

Die oben genannte Vorrichtung kann parallel und in der Achse zur Antriebswelle oder parallel und in Achse zu den freien Rädern angebracht werden; die Vorrichtung besteht aus einem Zahnrad, das auf der Antriebswelle angebracht ist und gleichzeitig mit ihr zusammen rotiert, sie besteht weiters aus einem Hebel, der mit einem Zahn versehen ist.

Die Zähne des Zahnrades haben eine geometrische Form, die man gemeinhin als "Sägezähne" bezeichnet und richten sich mit der längeren Seite nach der freien Rotationsrichtung des Zahnrades.

Der Hebel erlaubt die Drehung des Zahnrades, während das Fahrzeug fährt, verhindert aber eine Rotation, sollte das Fahrzeug zurückrollen.

Will man hingegen zurückfahren, d.h. den Rückgang einlegen, so wird der Hebel hochgehoben, und damit wird die Rotation des Zahnrades erlaubt, so kann die Antriebswelle in die andere Richtung drehen, des Zurückfahren wird ermöglicht.

Wenn das Fahrzeug aufwärts hält, wird die Vorrichtung automatisch durch die Rückrollbewegung des Fahrzeugs eingefügt, d.h. das Zahnrad wird automatisch durch den gezahnten Hebel blokkiert.

Dies geschieht, weil das Zahnrad sich gleichzeitig und gemeinsam mit der Antriebseinrichtung bewegt, und wenn das Fahrzeug wegen der Anziehungskraft zurückzurollen beginnt, fangen die Räder und in der Folge davon auch das Zahnrad, mit dem sie verbunden sind, an, sich der Fahrtrichtung entgegengesetzt zu drehen.

Der gezahnte Hebel, indem er nur die Vorwärtsbewegung des genannten Zahnrades erlaubt, blockiert das genannte Rad und in der Folge davon das Fahrzeug.

Um die Blockiervorrichtung wieder rückgängig zu machen, genügt es, das Zahnrad nach vorwärts zu bewegen oder den Rückgang einzulegen, somit wird nämlich der Hebel vom Zahnrad hochgehoben und die Vorrichtung außer Kraft gesetzt.

Das Außerkraftsetzen der automatischen Vorrichtung erfolgt durch das Einlegen des Rückganges mittels einer Verbindung, wenn möglich mit dem Schaltknüppel, der pneumatisch, hydraulisch, mechanisch, elektromechanisch oder anderer Art sein kann.

Diese Vorrichtung erleichtert einerseits das Fahren, andererseits hat sie auch den großen Vorteil, die Antriebseinrichtung des Fahrzeugs vor übermäßigen Belastungen und Spannungen zu schützen. Es ist aber auch möglich, zwei Zahnräder mit den dazugehörenden beweglichen Zahnhebeln einzubauen; die Zähne der Hebel sind dann auf die entgegengesetzte Richtung ausgerichtet, d.h. einer für eine Vorwärtsrotation und einer für eine Rückwärtsrotation.

Daraus folgt, daß die Zahnräder die Bewegung in eine oder in beide Richtungen der Fahrzeugfortbewegung verhindern.

Das bedeutet im einzelnen, wenn man die Schaltung auf einen Vorwärtsgang einlegt, wird automatisch die Vorrichtung, die das Vorwärtsbewegen des Fahrzeuge verhindert, außer Kraft gesetzt, aber die Vorrichtung, die die Rückwärtsbewegung verhindert, bleibt aktiv; sollte hingegen der Rückgang eingelegt werden, so wird automatisch die Vorrichtung, die die Rückwärtsbewegung verhindert, außer Kraft gesetzt und jene Vorrichtung, die das Vorwärtsrollen verhindert, bleibt aktiv; mittels eines Befehls, der manuell, mit Knopfdruck, oder mit einem Hebel gegeben werden kann, können beide Vorrichtungen entweder ein- oder ausgeschaltet werden, unabhängig davon, in welcher Position der Schaltknüppel steht.

Bezugnehmend auf die beigelegte Zeichnung, wird die Erfindung genauer beschrieben.

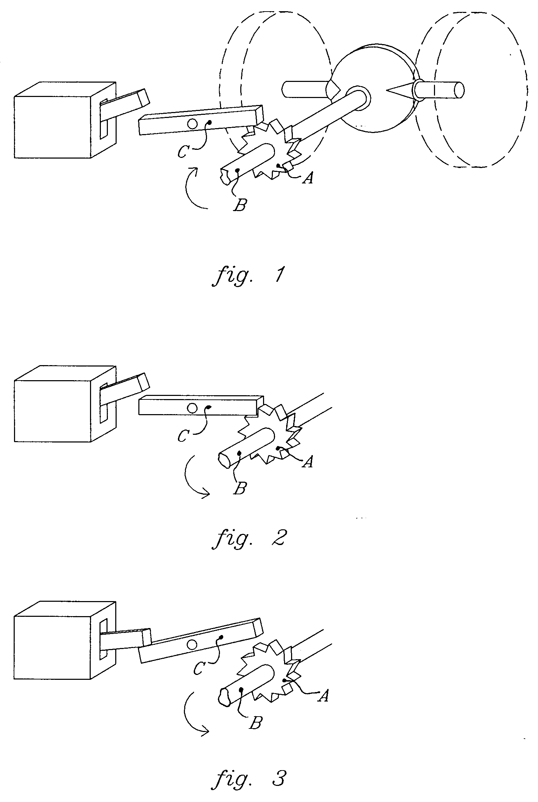

Abbildung 1 zeigt das Zahnrad A, das sich gemeinsam und gleichzeitig mit der Antriebswelle oder mit der Radnabe bewegt B, und den gezahnten Hebel C.

Während der Vorwärtsbewegung rotiert das Zahnrad A gemeinsam mit der Antriebswelle in dieselbe Richtung, z. B. im Uhrzeigersinn, und somit blockiert der Zahnhebel C die Bewegung nicht.

Wenn nun das Fahrzeug angehalten wird und es dazu tendieren würde, wegen einer Steigung zurückzurollen, beginnt die Antriebswelle D, die mit den Rädern verbunden ist, in die andere Richtung zu drehen (Abbildung 2); das Zahnrad A, da es sich gleichzeitig und gemeinsam bewegt und der Rotation folgt, wird vom gezahnten Hebel (B) blokkiert.

Daraus folgt, daß durch das Blockieren des Zahnrades A auch das Fahrzeug blockiert wird.

Abbildung 3 zeigt die Vorrichtung, wenn sie nicht eingelegt ist, weil der Rückgang eingeschaltet wurde.

Dies sind die nötigen schematischen Vorraussetzungen, die eine erfahrene Person braucht, um die Erfindung verwirklichen zu können; daraus folgt, daß bei einer konkreten Umsetzung der Erfindung auch Abänderungen angebracht werden können, ohne daß der Kern der Neuheit angegriffen wird

**Patentansprüche**

1.  Eine Vorrichtung für Fahrzeuge, die dadurch gekennzeichnet ist, daß sie auf den Antriebseinrichtungen des Fahrzeugs montiert wird und die Rotation nur in eine Richtung erlaubt.

2.  Eine Vorrichtung für Fahrzeuge, wie unter Punkt 1, die dadurch gekennzeichnet ist, daß das Ein- und Ausschalten eben der genannten Vorrichtung durch den Schaltknüppel getätigt wird.

3.  Eine Vorrichtung für Fahrzeuge, wie unter Punkt 1, die dadurch gekennzeichnet ist, daß das Ein- und Ausschalten der genannten Vorrichtung manuell, durch Knopfdruck, Schalthebel oder ähnliches erfolgt.

4.  Eine Vorrichtung für Fahrzeuge, wie unter Punkten 1, 2, 3, die dadurch gekennzeichnet ist, daß sie aus einem Zahnrad, das sich gemeinsam und gleichzeitig mit der Antriebseinrichtung oder den freien Rädern dreht, und weiters aus einem gezahnten Hebel besteht, der die Rotation des genannten Zahnrades nur in die Richtung erlaubt, die mit dem Vorwärtsgang des Fahrzeugs übereinstimmt.

5.  Eine Vorrichtung für Fahrzeuge, wir unter den Punkten 1, 2, 3, 4, die dadurch gekennzeichnet ist, daß die genannte Vorrichtung innen im Differential- und Schaltgehäuse enthalten ist.

6.  Eine Vorrichtung für Fahrzeuge, wie unter den Punkten 1, 2 und 3, die dadurch gekennzeichnet ist, daß der gezahnte Hebel automatisch das Zahnrad beeinflußt und daß der genannte Hebel mechanisch, pneumatisch, hydraulisch oder mit einem anderen System mit dem Schaltknüppel verbunden ist, der auch das Ausschalten erlaubt.

7.  Eine Vorrichtung für Fahrzeuge, die dadurch gekennzeichnet ist, daß auf den Antriebseinrichtungen zwei Vorrichtungen angebracht sind, die jeweils die Rotation dieser Einrichtung in eine Richtung erlauben und die, wenn man einen Gang einlegt, nur eine dieser Vorrichtungen außer Kraft setzen.

*fig. 1*

*fig. 2*

*fig. 3*

**Europäisches Patentamt**

# EUROPÄISCHER RECHERCHENBERICHT

Nummer der Anmeldung

EP    92 10 4836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-1 104 076 (ROBERT FERRET) <br> * das ganze Dokument * <br> --- | 1-4,6 | B60T7/12 <br> B60T1/00 |
| X | US-A-2 209 695 (CHARLES HEINZE) <br> * das ganze Dokument * <br> --- | 1,7 | |
| X | GB-A-437 132 (CECIL WHEATLEY  STANCLIFFE) <br> * Seite 3, Zeile 57 - Seite 5, Zeile 25; <br> Abbildungen 1,2 * <br> --- | 1,3 | |
| X | BE-A-468 620 (HUBERT CORNELIS) <br> * Seite 3, Zeile 7 - Seite 4, Zeile 30; <br> Abbildungen 1-3 * <br> ----- | 1-5 | |
| | | | **RECHERCHIERTE SACHGEBIETE (Int. Cl.5 )** <br><br> B60T |

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | HARTEVELD C.D.H. |